# EUROPEAN PATENT APPLICATION

(11) **EP 4 242 771 A1**
(43) Date of publication of application: **13.09.2023**
(21) Application number: 21938930.1
(22) Date of filing: 03.11.2021
(51) Int. Cl.: G05D 1/02

(54) **AUTOMATIC DRIVING METHOD, SYSTEM AND DEVICE FOR AGRICULTURAL MACHINERY AND READABLE STORAGE MEDIUM**

(30) Priority: 26.04.2021 CN 202110453680
(71) Applicant: Shanghai Allynav Technology Co. Ltd., Shanghai 201702 (CN)
(72) Inventor: LI, Xiaoyu, Shanghai 201702 (CN); MA, Fei, Shanghai 201702 (CN); XU, Jiyang, Shanghai 201702 (CN)
(74) Representative: Cleanthous, Marinos
(86) International application number: PCT/CN2021/128396
(87) International publication number: WO 2022/227468

(57) **Abstract**

The present disclosure discloses a method for automatic driving of an agricultural machinery, including: acquiring agricultural machinery operational parameters of an agricultural machinery through a data acquisition device; calculating optimal driving parameters of the agricultural machinery by using a preset automatic driving model according to the agricultural machinery operational parameters; and uploading the optimal driving parameters to a control terminal, so that the control terminal controls, according to the optimal driving parameters, the agricultural machinery to perform automatic driving. According to the present disclosure, driving parameters do not need to be adjusted by a user or professional technical personnel, but a machine model automatically adjusts the driving parameters, so that the process that technical personnel need to provide remote guidance or operation for parameter adjustment before agricultural operations is eliminated, and the usability and universality of automatic driving products of agricultural machineries are greatly improved. The present disclosure also provides a system, equipment, and readable storage medium for automatic driving of an agricultural machinery, which have the above-mentioned beneficial effects.

## Description

### TECHNICAL FIELD

The present disclosure relates to the field of automatic driving of agricultural machinery, particularly to a method, system, equipment and readable storage medium for automatic driving of an agricultural machinery.

### BACKGROUND

With the maturity of a satellite positioning technology (such as a Beidou satellite system in China), a communication technology, a computer technology, and an automatic control technology, position information of agricultural machinery can be accurately determined according to a received satellite signal. By detecting and analyzing a current state of the agricultural machinery, a reasonable automatic driving plan can be made to control the agricultural machinery to run according to a prescribed route. This automatic driving technology can be applied to the agricultural machinery, to reduce the production costs and improve the work efficiency.

However, after an automatic driving system is installed on the agricultural machinery, some parameters need to be adjusted to optimize the automatic driving performance. Since conditions of each agricultural machinery are different, and a service life and wear degree of the agricultural machinery are also different, operating parameters of each agricultural machinery are also different. On the other hand, the parameters of the same agricultural machinery often need to be readjusted on a farmland with a large difference in driving conditions. However, since agricultural operational areas are relatively remote, and direct users have a low education level, it is very difficult to complete the adjustment of these parameters. Therefore, technical personnel need to provide remote guidance or operation. This situation greatly reduces the usability and universality of automatic driving products of agricultural machineries.

Therefore, how to achieve automatic adjustment and optimization of driving parameters to improve the usability and universality of the automatic driving products of the agricultural machinery is a technical problem that those skilled in the art currently need to solve.

### SUMMARY

The present disclosure aims to provide a method, system, equipment, and readable storage medium for automatic driving of an agricultural machinery, which are used to achieve automatic adjustment and optimization of driving parameters, thereby improving the usability and universality of automatic driving products of agricultural machineries.

In order to solve the above technical problem, the present disclosure provide a method for automatic driving of an agricultural machinery. The method includes:
acquiring agricultural machinery operational parameters of agricultural machinery through a data acquisition device;
calculating optimal driving parameters of the agricultural machinery by using a preset automatic driving model according to the agricultural machinery operational parameters; and
uploading the optimal driving parameters to a control terminal, so that the control terminal controls, according to the optimal driving parameters, the agricultural machinery to perform automatic driving.

Optionally, the calculating optimal driving parameters of the agricultural machinery by using a preset automatic driving model according to the agricultural machinery operational parameters further includes:
controlling, according to input preset driving parameters by the control terminal, a preset number of test agricultural machineries to perform automatic driving;
uploading agricultural machinery operational parameters of the test agricultural machineries and straightness data of actual operations generated by the automatic driving of the test agricultural machineries to a cloud database;
constructing a corresponding training data set according to the data in the cloud database, and constructing a corresponding multi-input multi-output neural network model according to the data in the cloud database; and
training the multi-input multi-output neural network model by using the training data set to obtain the preset automatic driving model.

Optionally, the constructing a corresponding training data set according to the data in the cloud database includes:
cleaning and filtering the data in the cloud database according to a preset validation rule to obtain valid data; and
marking valid data with the straightness data greater than a first threshold as a positive training data set, and marking data with the straightness data less than the first threshold as a negative training data set.

Optionally, after the uploading the optimal driving parameters to a control terminal, so that the control terminal controls, according to the optimal driving parameters, the agricultural machinery to perform automatic driving, the method further includes:
collecting the straightness data of the agricultural machinery after the automatic driving;
when the straightness data is greater than a second threshold, performing forward excitation on the preset automatic driving model by using the agricultural machinery operational parameters and optimal driving parameters of the agricultural machinery; and
when the straightness data is less than a third threshold, performing reverse adjustment and optimization on the preset automatic driving model by using the agricultural machinery operational parameters and optimal driving parameters of the agricultural machinery.

Optionally, the data acquisition device includes a global navigation satellite system receiver and/or an inertial sensor.

Optionally, the optimal driving parameters include at least one of a tracking coefficient, a hydraulic assisted drive inertia coefficient, a bump compensation coefficient, and a slope sideslip compensation coefficient.

Optionally, the agricultural machinery operational parameters include at least one of an agricultural machinery type, an agricultural machinery brand, a service life, an operation land condition, an operation speed, and an operation type.

The present disclosure further provides a system for automatic driving of an agricultural machinery, including:
an acquisition module, configured to acquire agricultural machinery operational parameters of agricultural machinery through a data acquisition device;
a calculation module, configured to calculate optimal driving parameters of the agricultural machinery by using a preset automatic driving model according to the agricultural machinery operational parameters; and
an automatic driving module, configured to upload the optimal driving parameters to a control terminal, so that the control terminal controls, according to the optimal driving parameters, the agricultural machinery to perform automatic driving.

The present disclosure further provides equipment for automatic driving of an agricultural machinery, including:
a memory, configured to store a computer program; and
a processor, configured to implement, when running the computer program, the steps of any one of the above methods for automatic driving of an agricultural machinery.

The present disclosure further provides a readable storage medium. The readable storage medium stores a computer program; and the computer program, when executed by a processor, implements the steps of any one of the above methods for automatic driving of an agricultural machinery.

The present disclosure provides a method for automatic driving of an agricultural machinery, including: acquiring agricultural machinery operational parameters of an agricultural machinery through a data acquisition device; calculating optimal driving parameters of the agricultural machinery by using a preset automatic driving model according to the agricultural machinery operational parameters; and uploading the optimal driving parameters to a control terminal, so that the control terminal controls, according to the optimal driving parameters, the agricultural machinery to perform automatic driving.

According to the technical solution of the present disclosure, the agricultural machinery operational parameters of the agricultural machinery are acquired through the data acquisition device; the optimal driving parameters of the agricultural machinery are calculated by using the preset automatic driving model according to the agricultural machinery operational parameters; and the optimal driving parameters are uploaded to a control terminal, so that the control terminal controls, according to the optimal driving parameters, the agricultural machinery to perform automatic driving. In the whole process, a user or professional technical personnel does not adjust the driving parameters, but a machine model automatically adjusts the driving parameters, so that the process that technical personnel need to provide remote guidance or operation for parameter adjustment before agricultural operations is eliminated, and the usability and universality of automatic driving products of agricultural machineries are greatly improved. The present disclosure also provides a system, equipment, and readable storage medium for automatic driving of an agricultural machinery, which have the above-mentioned beneficial effects and will not be repeated here.

### BRIEF DESCRIPTION OF THE DRAWINGS

In order to describe the embodiments of the disclosure or the technical solutions in the existing art more clearly, drawings required to be used in the embodiments or the illustration of the existing art will be briefly introduced below. Apparently, the drawings in the illustration below are only some embodiments of the present disclosure. Those ordinarily skilled in the art also can obtain other drawings according to the provided drawings without creative work.
FIG. 1 is a flowchart of a method for automatic driving of an agricultural machinery according to an embodiment of the present disclosure;
FIG. 2 is a flowchart of a construction process of a preset automatic driving model according to an embodiment of the present disclosure;
FIG. 3 is a structural diagram of a multi-input multi-output neural network according to an embodiment of the present disclosure;
FIG. 4 is a structural diagram of a system for automatic driving of an agricultural machinery according to an embodiment of the present disclosure; and
FIG. 5 is a structural diagram of equipment for automatic driving of an agricultural machinery according to an embodiment of the present disclosure.

### DETAILED DESCRIPTION OF THE EMBODIMENTS

The core of the present disclosure is to provide a method, system, equipment, and readable storage medium for automatic driving of agricultural machinery, which are used to achieve automatic adjustment and optimization of driving parameters, thereby improving the usability and universality of automatic driving products of agricultural machineries.

In order to make the objectives, technical schemes and advantages of the embodiments of the present disclosure clearer, the technical schemes in the embodiments of the present disclosure will be described clearly and completely below in combination with the drawings in the embodiments of the present disclosure. Apparently, the embodiments described are part of the embodiments of the present disclosure, not all the embodiments. Based on the embodiments in the present disclosure, all other embodiments obtained by those of ordinary skill in the art without creative work all fall within the protection scope of the present disclosure.

Most of existing agricultural machineries are manually driven. For a large area of farmland, drivers need to work for a long time, and easily get tired. Moreover, the most important thing is that an agricultural machinery is used in stages, and is only required during time periods of cultivation, sowing, and harvesting. In this way, drivers working outside or in other industries have to return home during the busy farming seasons, or large land contractors have to hire a large number of drivers to carry out agricultural work during the busy farming seasons, which will undoubtedly increase the use costs.

A driverless technology can be applied to an agricultural machinery in the prior art. However, after an automatic driving system is installed on the agricultural machinery, some parameters need to be adjusted to optimize the automatic driving performance. Since conditions of each agricultural machinery are different, and a service life and wear degree of the agricultural machinery are also different, operating parameters of each agricultural machinery are also different. On the other hand, the parameters of the same agricultural machinery often need to be readjusted on a farmland with a large difference in driving conditions. However, since agricultural operational areas are relatively remote, and direct users have a low education level, it is very difficult to complete the adjustment of these parameters. Therefore, technical personnel need to provide remote guidance or operation. This situation greatly reduces the usability and universality of automatic driving products of agricultural machineries. The present disclosure provides a method for automatic driving of an agricultural machinery to solve the above problems.

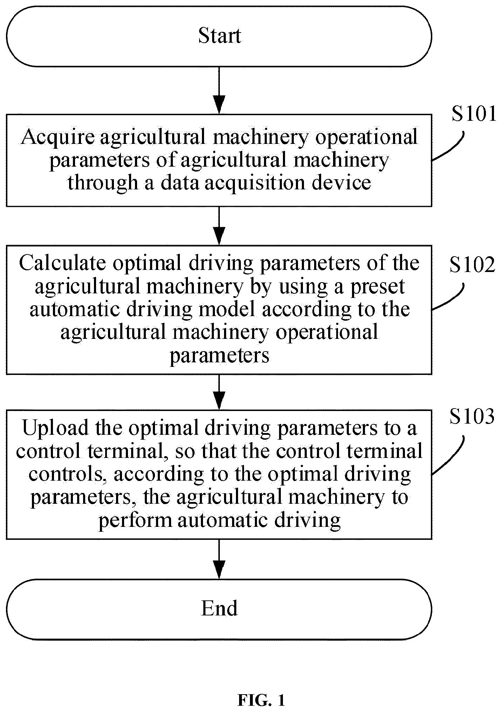

Referring to FIG. 1, FIG. 1 is a flowchart of a method for automatic driving of an agricultural machinery according to an embodiment of the present disclosure.

The method includes the following steps:
S101: Acquire agricultural machinery operational parameters of agricultural machinery through a data acquisition device.

The agricultural machinery operational parameters mentioned here may include at least one of an agricultural machinery type, an agricultural machinery brand, a service life, an operation land condition, an operation speed, and an operation type.

The data acquisition device mentioned here can include a global navigation satellite system receiver and/or an inertial sensor. The global navigation satellite system receiver is configured to achieve navigation and positioning, and the inertial sensor is configured to measure a posture of the agricultural machinery and data of operation land conditions.

In this step, the present disclosure acquires the agricultural machinery operational parameters through the data acquisition device, which aims to calculate the optimal driving parameters of the agricultural machinery according to the agricultural machinery operational parameters, thereby adjusting the driving parameters. The process that technical personnel need to provide remote guidance or operation for parameter adjustment before agricultural operations is eliminated, and the usability and universality of automatic driving products of agricultural machineries are greatly improved.

S102: Calculate optimal driving parameters of the agricultural machinery by using a preset automatic driving model according to the agricultural machinery operational parameters.

The optimal driving parameters mentioned here include at least one of a tracking coefficient, a hydraulic assisted drive inertia coefficient, a bump compensation coefficient, and a slope sideslip compensation coefficient. In a current automatic driving system, control parameters are often manually adjusted, which mainly includes adjusting coefficients related to the agricultural machinery type, the agricultural machinery brand, the service life, the operation land condition, the operation speed, and the operation type, such as the tracking coefficient, the hydraulic assisted drive inertia coefficient, the bump compensation coefficient, and the slope sideslip compensation coefficient. The automatic driving system can complete normal high-precision operations only when these coefficients are adjusted properly. Therefore, the present disclosure calculates the optimal driving parameters of the agricultural machinery according to the agricultural machinery operational parameters, and cooperates with the automatic driving system to complete high-precision operations.

S103: Upload the optimal driving parameters to a control terminal, so that the control terminal controls, according to the optimal driving parameters, the agricultural machinery to perform automatic driving.

Based on the above technical solution, according to the method for automatic driving of an agricultural machinery of the present disclosure, the agricultural machinery operational parameters of the agricultural machinery are acquired through the data acquisition device; the optimal driving parameters of the agricultural machinery are calculated by using the preset automatic driving model according to the agricultural machinery operational parameters; and the optimal driving parameters are uploaded to a control terminal, so that the control terminal controls, according to the optimal driving parameters, the agricultural machinery to perform automatic driving. In the whole process, a user or professional technical personnel does not adjust the driving parameters, but a machine model automatically adjusts the driving parameters, so that the process that technical personnel need to provide remote guidance or operation for parameter adjustment before agricultural operations is eliminated, and the usability and universality of automatic driving products of agricultural machineries are greatly improved.

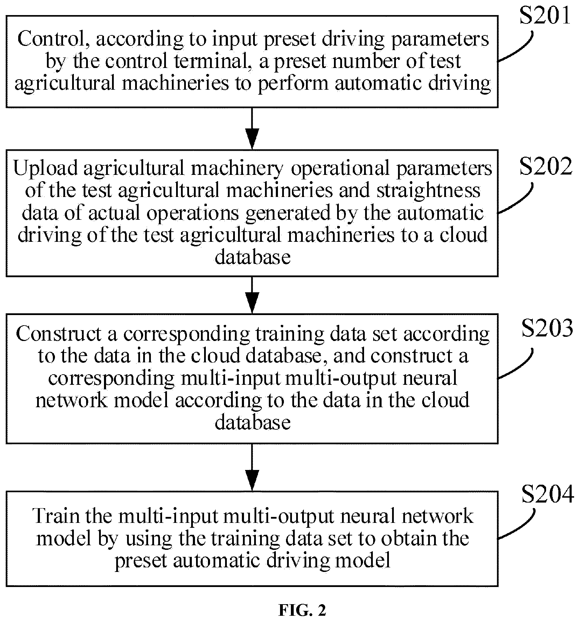

In a specific embodiment, before the step S102 of calculating optimal driving parameters of the agricultural machinery by using a preset automatic driving model according to the agricultural machinery operational parameters, the steps shown in FIG. 2 can also be performed to construct the preset automatic driving model. Refer to FIG. 2 below. FIG. 2 is a flowchart of a construction process of a preset automatic driving model according to an embodiment of the present disclosure, specifically including the following steps:
S201: Control, according to input preset driving parameters by the control terminal, a preset number of test agricultural machineries to perform automatic driving.
S202: Upload agricultural machinery operational parameters of the test agricultural machineries and straightness data of actual operations generated by the automatic driving of the test agricultural machineries to a cloud database.

In a specific embodiment, thousands of agricultural machineries can be installed with the automatic driving system. The system includes a global navigation satellite system receiver configured to achieve navigation and positioning, an inertial sensor configured to measure a posture of the agricultural machinery and data of operation land conditions, a tablet computer configured to achieve control and communicate with the Internet, and a steering wheel motor configured to execute a control command to simultaneously control steering of the agricultural machineries. There is a service backend configured to communicate with the tablet computer mounted on the agricultural machinery and a database on the cloud server. The service backend can receive and send data, and store the received data in the database. There is a control system in the tablet computer to automatically control the agricultural machinery, and the control system in the tablet computer can communicate with the cloud server. Before operation, technical personnel will adjust the parameters of the automatic driving system to be correct to ensure that agricultural machinery can perform normal high-precision operations. When the agricultural machinery performs a high-precision operation, the agricultural machinery type, the agricultural machinery brand, the service life, the operation land condition, the operation speed, the operation type, operation straightens, and parameters of the automatic driving system will be uploaded to the cloud database. According to a continuous operation state of the agricultural machinery, the database will generate massive basic data.

S203: Construct a corresponding training data set according to the data in the cloud database, and construct a corresponding multi-input multi-output neural network model according to the data in the cloud database.

In a specific embodiment, due to a possibility of various erroneous data in a data collection process, data cleaning can also be performed according to a preset validity rule. As mentioned here, a corresponding training data set is constructed according to the data in the cloud database, which may specifically include:
cleaning and filtering the data in the cloud database according to a preset validation rule to obtain valid data; and
marking valid data with the straightness data greater than a first threshold as a positive training data set, and marking data with the straightness data less than the first threshold as a negative training data set.

For example, data with straightness less than 90% and above 90% can be divided into a negative data set and a positive data set, and a multi-input multi-output neural network can be designed for training according to different correlations between the data.

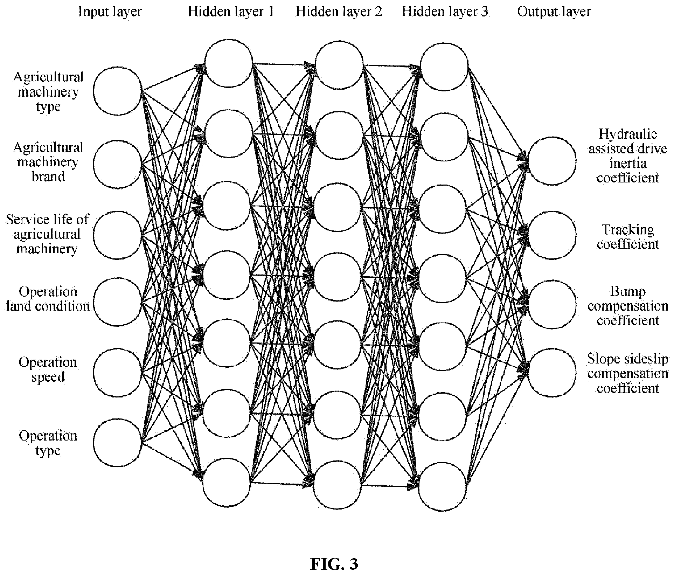

Referring to FIG. 3, FIG. 3 is a structural diagram of a multi-input multi-output neural network according to an embodiment of the present disclosure. In a specific embodiment, the multi-input multi-output neural network includes an input layer, a hidden layer 1, a hidden layer 2, a hidden layer 3, and an output layer. An input content of the input layer includes the agricultural machinery type, the agricultural machinery brand, the service life of the agricultural machinery, the operation land conditions, the operation speed, and the operation type. Contents output by the output layer includes the hydraulic assisted drive inertia coefficient, the tracking coefficient, the bump compensation coefficient, and the slope sideslip compensation coefficient.

S204: Train the multi-input multi-output neural network model by using the training data set to obtain the preset automatic driving model.

In a specific embodiment, after the uploading the optimal driving parameters to the control terminal, so that the control terminal controls, according to the optimal driving parameters, the agricultural machinery to perform automatic driving, the following steps can also be executed to adjust the preset automatic driving model:
collecting the straightness data of the agricultural machinery after the automatic driving;
when the straightness data is greater than a second threshold, performing forward excitation on the preset automatic driving model by using the agricultural machinery operational parameters and optimal driving parameters of the agricultural machinery; and
when the straightness data is less than a third threshold, performing reverse adjustment and optimization on the preset automatic driving model by using the agricultural machinery operational parameters and optimal driving parameters of the agricultural machinery.

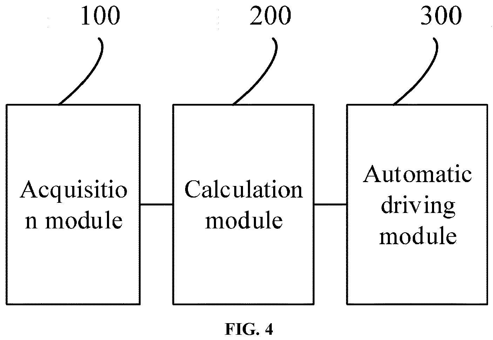

Referring to FIG. 4, FIG. 4 is a structural diagram of a system for automatic driving of an agricultural machinery according to an embodiment of the present disclosure.

The system may include:
an acquisition module 100, configured to acquire agricultural machinery operational parameters of agricultural machinery through a data acquisition device;
a calculation module 200, configured to calculate optimal driving parameters of the agricultural machinery by using a preset automatic driving model according to the agricultural machinery operational parameters; and
an automatic driving module 300, configured to upload the optimal driving parameters to a control terminal, so that the control terminal controls, according to the optimal driving parameters, the agricultural machinery to perform automatic driving.

Based on the above embodiment, in a specific embodiment, the system may further include:
a control module, configured to control, according to input preset driving parameters by the control terminal, a preset number of test agricultural machineries to perform automatic driving;
an uploading module, configured to upload agricultural machinery operational parameters of the test agricultural machineries and straightness data of actual operations generated by the automatic driving of the test agricultural machineries to a cloud database;
a construction module, configured to: construct a corresponding training data set according to the data in the cloud database, and construct a corresponding multi-input multi-output neural network model according to the data in the cloud database; and
a training module, configured to train the multi-input multi-output neural network model by using the training data set to obtain the preset automatic driving model.

Based on the above embodiment, in a specific embodiment, the construction module may include:
a filtering sub-module, configured to clean and filter the data in the cloud database according to a preset validation rule to obtain valid data; and
a marking sub-module, configured to: mark valid data with the straightness data greater than a first threshold as a positive training data set, and mark data with the straightness data less than the first threshold as a negative training data set.

Based on the above embodiment, in a specific embodiment, the system may further include:
a collection module, configured to collect the straightness data of the agricultural machinery after the automatic driving;
a forward excitation module, configured to: when the straightness data is greater than a second threshold, perform forward excitation on the preset automatic driving model by using the agricultural machinery operational parameters and optimal driving parameters of the agricultural machinery; and
a reverse adjustment module, configured to: when the straightness data is less than a third threshold, perform reverse adjustment and optimization on the preset automatic driving model by using the agricultural machinery operational parameters and optimal driving parameters of the agricultural machinery.

Based on the above embodiment, in a specific embodiment, the data acquisition device may include a global navigation satellite system receiver and/or an inertial sensor.

Based on the above embodiment, in a specific embodiment, the optimal driving parameters include at least one of a tracking coefficient, a hydraulic assisted drive inertia coefficient, a bump compensation coefficient, and a slope sideslip compensation coefficient.

Based on the above embodiment, in a specific embodiment, the agricultural machinery operational parameters may include at least one of an agricultural machinery type, an agricultural machinery brand, a service life, an operation land condition, an operation speed, and an operation type.

The embodiment of the system part corresponds to the embodiment of the method part, so that the embodiment of the system part refers to the description of the embodiment of the method part, and repeated descriptions will be omitted here.

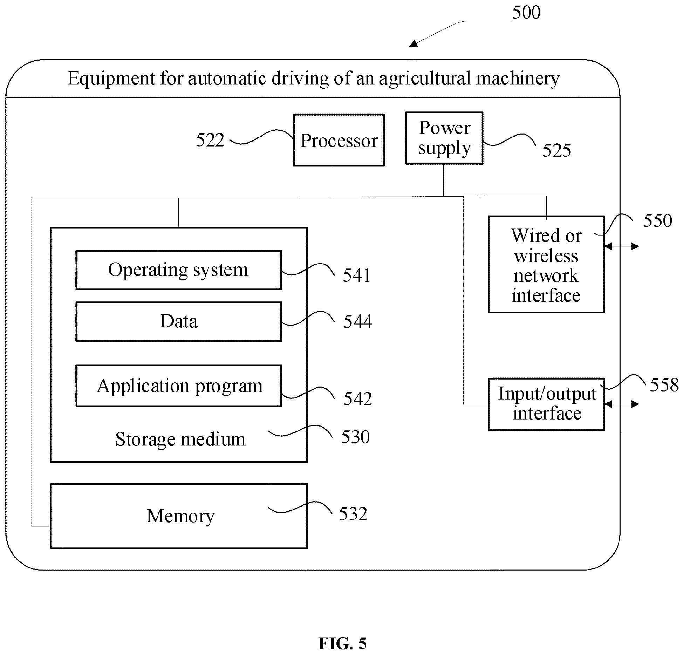

Referring to FIG. 5, FIG. 5 is a flowchart of equipment for automatic driving of an agricultural machinery according to an embodiment of the present disclosure.

The equipment 500 for automatic driving of an agricultural machinery may have significant differences due to different configurations or performance, and may include one or more central processing units (CPUs) 522 (for example, one or more processors), a memory 532, and one or more storage media 530 (for example, one or more massive storage devices) for storing application programs 542 or data 544. The memory 532 and the storage media 530 can be temporary or persistent storage. Programs stored on the storage media 530 may include one or more modules (not shown in the figures), and each module may include a series of instruction operations in the device. Much further, the processor 522 can be configured to communicate with the storage media 530 and perform the series of instruction operations in the storage media 530 on the equipment 500 for automatic driving of an agricultural machinery.

The equipment 500 for automatic driving of an agricultural machinery can further include one or more power supplies 525, one or more wired or wireless network interfaces 550, one or more input/output interfaces 558, and/or, one or more operating systems 541, for example, Windows ServerTM, Mac OS XTM, UnixTM, LinuxTM, and FreeBSDTM.

The steps in the method for automatic driving of an agricultural machinery described in FIG. 1 to FIG. 3 are achieved on the basis of the structures shown in FIG. 5.

Those skilled in the art can clearly understand that, for the convenience and simplicity of description, the specific working process of the above described systems, apparatuses and modules can refer to the corresponding processes in the above method embodiments, and will not be repeated here.

In the several embodiments provided by the present disclosure, it should be understood that the disclosed device, equipment, and methods may be implemented in other ways. For example, the apparatus embodiments described above are only schematic. For example, the division of the modules is only a logical function division, and there may be another division method during actually implementation. For example, multiple modules or components can be combined or integrated into another system, or some features can be ignored or not performed. From another point of view, the mutual coupling or direct coupling or communication connection shown or discussed may be indirect coupling or communication connection through some interfaces, apparatuses or modules, and may be in electrical, mechanical or other forms.

The modules described as separate components may or may not be physically separated, and the components displayed as modules may or may not be physical modules, that is, they may be located in one place, or they may be distributed on multiple network modules. Some or all of the modules may be selected according to actual needs to achieve the objectives of the solutions of the embodiments.

In addition, all the functional modules in all the embodiments of the present disclosure can be integrated into one processing module, or each module can physically exist alone, or two or more units can be integrated in one module. The above integrated modules can be implemented in the form of hardware, or can be implemented in the form of software functional modules.

The integrated module, if implemented in the form of a software functional unit and sold or used as a standalone product, may be stored in a computer-readable storage medium. Based on this understanding, the technical solutions of the present disclosure, or the part that contributes to the prior art, or all or part of the technical solutions can be embodied in the form of a software product in essence. The computer software product is stored in one storage medium, including several instructions are used for causing a computer device (which may be a personal computer, a function invoking apparatus, a network device, or the like) to execute all or part of the steps of the methods described in various embodiments of the present disclosure. The aforementioned storage media include: a USB flash disk, a mobile hard disk, a Read-Only Memory (ROM), a Random Access Memory (RAM), a magnetic disk or optical disc, and other media that can store program codes.

The above provides a detailed introduction to the method, system, equipment, and readable storage medium for automatic driving of an agricultural machinery provided in the present disclosure. The principles and implementations of the present disclosure are described herein by using specific examples, and the descriptions of the above embodiments are only used to help understand the method of the present disclosure and the core idea of the method. It should be pointed out that for those skilled in the art, without departing from the principle of the present disclosure, several improvements and modifications can also be made to the present disclosure, and these improvements and modifications also fall within the protection scope of the claims of the present disclosure.

It should be noted that in this specification, relational terms such as first and second are used merely to distinguish one entity or operation from another entity or operation, instead of necessarily requiring or implying that these entities or operations have any of these actual relationships or orders. Furthermore, terms "include", "including" or any other variants are meant to cover non-exclusive inclusions, so that a process, method, object or device that includes a series of elements not only includes those elements, but also includes other elements which are not definitely listed, or further includes inherent elements of this process, method, object or device. Elements defined by a sentence "includes a/an ... " do not exclude that the process, method, object or device that includes the elements still includes other identical elements without more restrictions.

## Claims

1. A method for automatic driving of an agricultural machinery, comprising:
acquiring agricultural machinery operational parameters of agricultural machinery through a data acquisition device;
calculating optimal driving parameters of the agricultural machinery by using a preset automatic driving model according to the agricultural machinery operational parameters; and
uploading the optimal driving parameters to a control terminal, so that the control terminal controls, according to the optimal driving parameters, the agricultural machinery to perform automatic driving.

2. The method according to claim 1, wherein before the calculating optimal driving parameters of the agricultural machinery by using a preset automatic driving model according to the agricultural machinery operational parameters, the method further comprises:
controlling, according to input preset driving parameters by the control terminal, a preset number of test agricultural machineries to perform automatic driving;
uploading agricultural machinery operational parameters of the test agricultural machineries and straightness data of actual operations generated by the automatic driving of the test agricultural machineries to a cloud database;
constructing a corresponding training data set according to the data in the cloud database, and constructing a corresponding multi-input multi-output neural network model according to the data in the cloud database; and
training the multi-input multi-output neural network model by using the training data set to obtain the preset automatic driving model.

3. The method according to claim 2, wherein the constructing a corresponding training data set according to the data in the cloud database comprises:
cleaning and filtering the data in the cloud database according to a preset validation rule to obtain valid data; and
marking valid data with the straightness data greater than a first threshold as a positive training data set, and marking data with the straightness data less than the first threshold as a negative training data set.

4. The method according to claim 3, wherein after the uploading the optimal driving parameters to a control terminal, so that the control terminal controls, according to the optimal driving parameters, the agricultural machinery to perform automatic driving, the method further comprises:
collecting the straightness data of the agricultural machinery after the automatic driving;
when the straightness data is greater than a second threshold, performing forward excitation on the preset automatic driving model by using the agricultural machinery operational parameters and optimal driving parameters of the agricultural machinery; and
when the straightness data is less than a third threshold, performing reverse adjustment and optimization on the preset automatic driving model by using the agricultural machinery operational parameters and optimal driving parameters of the agricultural machinery.

5. The method according to claim 1, wherein the data acquisition device comprises a global navigation satellite system receiver and/or an inertial sensor.

6. The method according to claim 1, wherein the optimal driving parameters comprise at least one of a tracking coefficient, a hydraulic assisted drive inertia coefficient, a bump compensation coefficient, and a slope sideslip compensation coefficient.

7. The method according to claim 1, wherein the agricultural machinery operational parameters comprise at least one of an agricultural machinery type, an agricultural machinery brand, a service life, an operation land condition, an operation speed, and an operation type.

8. A system for automatic driving of an agricultural machinery, comprising:
an acquisition module, configured to acquire agricultural machinery operational parameters of agricultural machinery through a data acquisition device;
a calculation module, configured to calculate optimal driving parameters of the agricultural machinery by using a preset automatic driving model according to the agricultural machinery operational parameters; and
an automatic driving module, configured to upload the optimal driving parameters to a control terminal, so that the control terminal controls, according to the optimal driving parameters, the agricultural machinery to perform automatic driving.

9. Equipment for automatic driving of an agricultural machinery, comprising:
a memory, configured to store a computer program; and
a processor, configured to implement, when running the computer program, the steps of the method for automatic driving of an agricultural machinery according to any one of claims 1 to 7.

10. A readable storage medium, wherein the readable storage medium stores a computer program; and the computer program, when executed by a processor, implements the steps of the method for automatic driving of an agricultural machinery according to any one of claims 1 to 7.
